# EUROPEAN PATENT APPLICATION

(11) **EP 4 847 194 A1**
(43) Date of publication of application: **02.12.2026**
(21) Application number: 26181292.9
(22) Date of filing: 27.05.2026
(51) Int. Cl.: B23Q 7/14

(54) **PALLET CONVEYANCE DEVICE AND PALLET HANDLING SYSTEM**

(30) Priority: 29.05.2025 JP 2025089818
(71) Applicant: DMG Mori Co., Ltd., Nara-shi, Nara 630-8122 (JP)
(72) Inventor: MATSUI, Satoshi, Nara City, Nara 630-8122 (JP)
(74) Representative: Isarpatent

(57) **Abstract**

A pallet conveyance device (10) includes a plurality of intermediate attachments (70) capable of supporting pallets (P) of different types, and a conveyance body (61) to which one of the plurality of intermediate attachments (70) is selectively attachable and which conveys a pallet (P).

## Description

### CROSS REFERENCE TO RELATED APPLICATIONS

This nonprovisional application is based on Japanese Patent Application No. 2025-089818 filed on May 29, 2025 with the Japan Patent Office, the entire contents of which are hereby incorporated by reference.

### BACKGROUND OF THE INVENTION

### Field of the Invention

The present invention relates to a pallet conveyance device and a pallet handling system.

### Description of the Background Art

For example, Japanese Patent Laying-Open No. 2020-110875 discloses a pallet conveyance system including a conveyance device for conveying a pallet, a pallet housing unit for housing the pallet, a workstation in which a worker is to conduct work of attaching a workpiece to the pallet conveyed from the pallet housing unit, and a machine tool for machining the workpiece attached to the pallet at the workstation.

### SUMMARY OF THE INVENTION

As disclosed in Japanese Patent Laying-Open No. 2020-110875 described above, a pallet handling system is known that includes a machine tool, a pallet stocker, and a pallet conveyance device for conveying a pallet between the machine tool and the pallet stocker. In such a pallet handling system, there is a demand for managing various types of pallets used by a plurality of machine tools by a common system.

An object of the present invention is to provide a pallet conveyance device capable of conveying various types of pallets, and a pallet handling system including such a pallet conveyance device.

A pallet conveyance device according to the present invention includes a plurality of intermediate attachments that support pallets of different types; and a conveyance body to which one of the plurality of intermediate attachments is selectively attachable and which conveys a pallet.

A pallet handling system according to the present invention includes: a plurality of machine tools on which pallets of different types are mounted; a pallet stocker for storing a plurality of pallets; and the above-described pallet conveyance device that conveys a pallet between each of the plurality of machine tools and the pallet stocker.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a top view of a pallet handling system in Embodiment 1 of the present invention.
Fig. 2 is a perspective view showing a manner of conveying a pallet by a pallet conveyance device of Fig. 1.
Fig. 3 is a view showing an internal structure of a hand in the pallet conveyance device shown in Fig. 1.
Fig. 4 is a side view of the pallet conveyance device of Fig. 1 (during conveyance of a first pallet).
Fig. 5 is another side view of the pallet conveyance device of Fig. 1 (during conveyance of the first pallet).
Fig. 6 is a side view of the pallet conveyance device within the area enclosed by a double-dashed line VI of Fig. 4 (during conveyance of the first pallet using a first intermediate attachment).
Fig. 7 is a side view of the pallet conveyance device within the area enclosed by a double-dashed line VII of Fig. 5 (during conveyance of the first pallet using the first intermediate attachment).
Fig. 8 is a top view of the pallet conveyance device of Figs. 6 and 7 (during conveyance of the first pallet using the first intermediate attachment).
Fig. 9 is a side view of the pallet conveyance device (during conveyance of a second pallet using a second intermediate attachment).
Fig. 10 is another side view of the pallet conveyance device (during conveyance of the second pallet using the second intermediate attachment).
Fig. 11 is a top view of the pallet conveyance device (during conveyance of the second pallet using the second intermediate attachment).
Fig. 12 is a side view of the pallet conveyance device (during conveyance of a third pallet using a third intermediate attachment).
Fig. 13 is another side view of the pallet conveyance device (during conveyance of the third pallet using the third intermediate attachment).
Fig. 14 is a side view showing a modification of a third machine tool of Fig. 1.
Fig. 15 is a top view of a pallet handling system in Embodiment 2 of the present invention.
Fig. 16 is a front view of a fifth machine tool of Fig. 15.
Fig. 17 is a top view of a pallet handling system in Embodiment 3 of the present invention.

### DESCRIPTION OF THE PREFERRED EMBODIMENTS

Embodiments of the present invention will be described with reference to the drawings. In the drawings referred to below, the same or corresponding elements have the same reference characters allotted.

### (Embodiment 1)

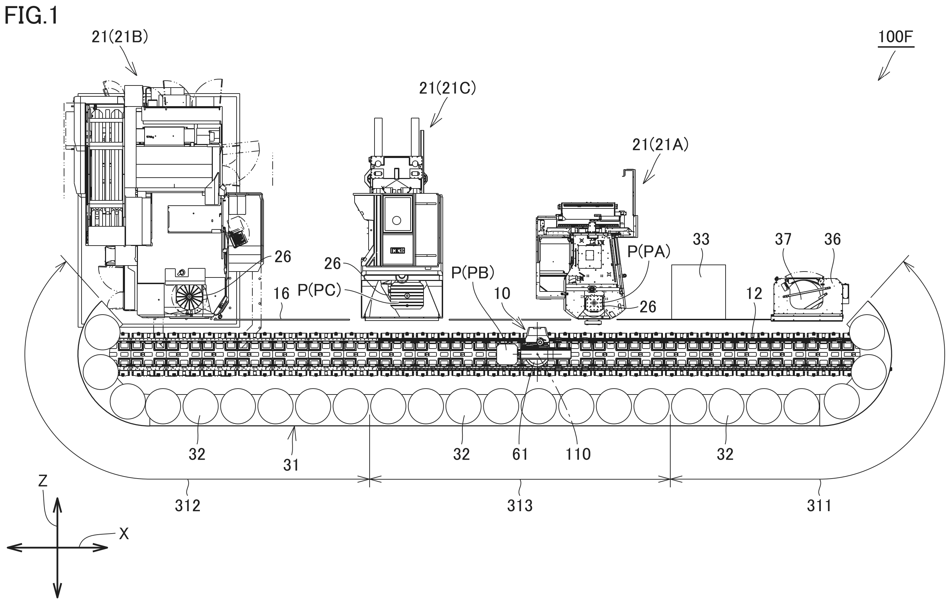

Fig. 1 is a top view of a pallet handling system in Embodiment 1 of the present invention. An X-axis extending in a horizontal direction, a Z-axis extending in the horizontal direction and perpendicular to the X-axis, and a Y-axis extending in an up-down direction are shown for the convenience of describing a configuration of a pallet handling system 100F in the present embodiment.

Referring to Fig. 1, pallet handling system 100F includes a plurality of machine tools 21 (first machine tool 21A, second machine tool 21B, third machine tool 21C), a pallet stocker 31, and a pallet conveyance device 10.

Pallet stocker 31 is capable of storing a plurality of pallets P. A workpiece to be machined in machine tool 21 is attached to pallet P. The workpiece is attached to pallet P via a fixture such as an equerre or a clamping device. Pallet conveyance device 10 conveys pallet P between each of the plurality of machine tools 21 and pallet stocker 31.

Pallet conveyance device 10 includes a conveyance body 61 and a base 12. Base 12 extends in the axial direction of the X-axis (also referred to as an "X-axis direction" below). Conveyance body 61 is disposed on base 12. An intermediate attachment 70, which will be described later, is attached to conveyance body 61, and conveyance body 61 conveys pallet P supported by intermediate attachment 70.

Machine tool 21 is a numerically controlled (NC) machine tool in which various operations for workpiece machining are automated by computer-based numerical control. Machine tool 21 is a machining center that brings a rotating tool into contact with a workpiece for machining (milling) of the workpiece.

The plurality of machine tools 21 are spaced apart from each other in the X-axis direction. In a top view of pallet handling system 100F shown in Fig. 1, the plurality of machine tools 21 are disposed along base 12.

Machine tool 21 includes a pallet placement stand 26. Pallet placement stand 26 is installed outside the machining area (the region in which the workpiece is machined). A pallet P, to which a workpiece before or after machining is attached, is placed on pallet placement stand 26. In a top view of pallet handling system 100F, machine tool 21 is disposed such that pallet placement stand 26 faces base 12 in the axial direction of the Z-axis (also referred to as a "Z-axis direction" below).

Each machine tool 21 of first machine tool 21A, second machine tool 21B, and third machine tool 21C includes: a tool spindle that is disposed within the machining area and is capable of holding a tool and rotating the held tool; a table that is disposed within the machining area and is capable of detachably holding pallet P and causing pallet P to swivel about a swivel center axis extending in the up-down direction; an automatic tool changer (ATC) for changing the tool held by the tool spindle; and a tool magazine that stores a plurality of tools. Each machine tool 21 of first machine tool 21A, second machine tool 21B, and third machine tool 21C may have an automatic pallet changer (APC) for changing pallet P between the table and pallet placement stand 26.

The position at which the workpiece attached to the pallet on the table is machined by a tool held by the tool spindle changes three-dimensionally due to the relative movement of the tool spindle and the table in the axial directions of the mutually orthogonal x-axis, y-axis, and z-axis, and/or due to the swivel of the table about a swivel center axis extending in the up-down direction.

The combination of the axis of movement of the tool spindle and the axis of movement of the table may differ between one machine tool 21 and another machine tool 21 among the plurality of machine tools 21. The manufacturer of machine tool 21 may differ between one machine tool 21 and another machine tool 21 among the plurality of machine tools 21.

In the present embodiment, first machine tool 21A and second machine tool 21B are horizontal machining centers in which the rotation center axis of the tool extends in the horizontal direction. Third machine tool 21C is a 5-axis machine based on the configuration of a horizontal machining center, in which the direction of the rotational axis of the tool is further variable.

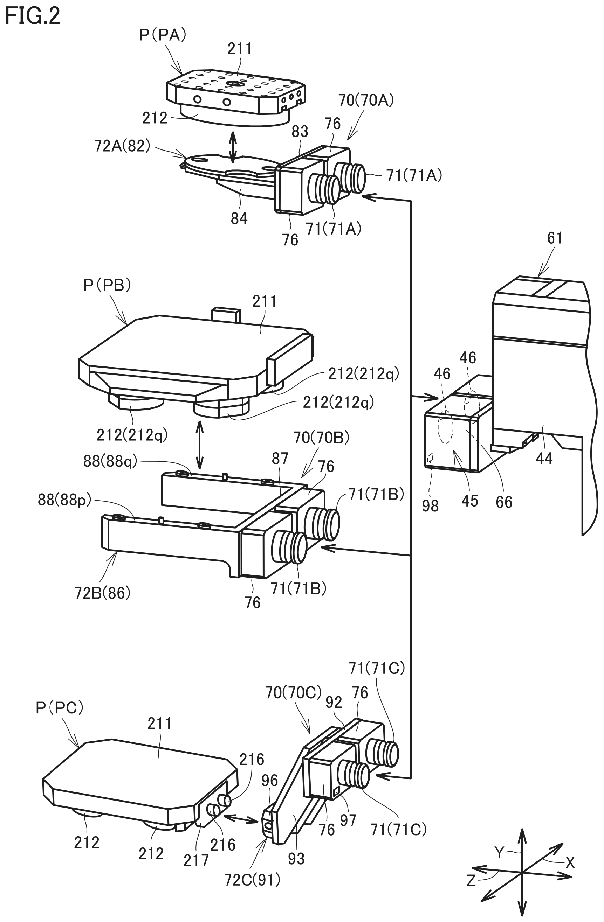

Fig. 2 is a perspective view showing a manner of conveying a pallet by the pallet conveyance device of Fig. 1. Referring to Figs. 1 and 2, a first pallet PA can be mounted on first machine tool 21A. A second pallet PB can be mounted on second machine tool 21B. A third pallet PC can be mounted on third machine tool 21C.

First pallet PA, second pallet PB, and third pallet PC are pallets of different types. At least one of the pallet size, the pallet bottom shape, and the manner of supporting a pallet by pallet conveyance device 10 differs among first pallet PA, second pallet PB, and third pallet PC.

As shown in Fig. 2, pallet P includes a plate portion 211 and a protruding portion 212. Plate portion 211 has a flat plate shape. Plate portion 211 has a flat plate shape in which the up-down direction corresponds to the thickness direction. A jig such as an equerre or a clamping device is attached to the upper surface of plate portion 211. The upper surface of plate portion 211 may have a rectangular shape. In this case, the length and width of the upper surface of plate portion 211 correspond to the pallet size. The upper surface of plate portion 211 may have a circular shape. In this case, the diameter of the upper surface of plate portion 211 corresponds to the pallet size.

Protruding portion 212 protrudes from the bottom surface of plate portion 211. Protruding portion 212 may include a gripping portion that is gripped by a clamping mechanism included in the table. Protruding portion 212 may include a positioning member, such as a tapered cone, for positioning pallet P relative to the table or pallet placement stand. Protruding portion 212 may include a coupler that serves as a connector for a fluid passage through which oil, air, coolant, or the like flows between the table and pallet P. The shape of protruding portion 212 corresponds to the pallet bottom shape.

The pallet size of first pallet PA is different from that of second pallet PB. The upper surfaces of plate portions 211 of first pallet PA and second pallet PB have a rectangular shape. The pallet size of first pallet PA is 500 mm × 500 mm. The pallet size of second pallet PB is 630 mm × 630 mm.

The pallet bottom shape of first pallet PA is different from that of second pallet PB.

As shown in Fig. 2 and Figs. 6 to 8, which will be described later, protruding portion 212 of first pallet PA has a circular outer shape when the lower surface of plate portion 211 is viewed from the front. The lower surface of plate portion 211 is exposed from protruding portion 212 in the region along the peripheral edge of protruding portion 212.

As shown in Fig. 2 and Figs. 9 to 11, which will be described later, protruding portion 212 of second pallet PB includes a base portion 212p and a plurality of cylindrical portions 212q. Base portion 212p protrudes from the lower surface of plate portion 211 of second pallet PB. Base portion 212p has a rectangular outer shape when the lower surface of plate portion 211 is viewed from the front. The lower surface of plate portion 211 is exposed from base portion 212p in the region along the peripheral edge of base portion 212p. Cylindrical portion 212q protrudes cylindrically from base portion 212p. The plurality of cylindrical portions 212q are provided at four corners of plate portion 211 when the lower surface of plate portion 211 is viewed from the front.

The manner of supporting first pallet PA by pallet conveyance device 10 (placement + support of the pallet center), the manner of supporting second pallet PB by pallet conveyance device 10 (placement + support of both ends of the pallet), and the manner of supporting third pallet PC by pallet conveyance device 10 (attachment by the actuator) are different from one another. This point will be described in detail later.

As shown in Fig. 1, pallet stocker 31 includes a plurality of pallet racks 32. Pallet rack 32 has a shelf shape on which pallet P can be placed. Pallet P is placed in pallet rack 32. In a top view of pallet handling system 100F, the plurality of pallet racks 32 are arranged along base 12. The plurality of pallet racks 32 are arranged in the X-axis direction on the side opposite the plurality of machine tools 21 with base 12 in between, and are arranged in an arc at both ends of base 12 in the X-axis direction.

Pallet stocker 31 includes a first storage portion 311, a second storage portion 312, and a third storage portion 313. Each of first storage portion 311, second storage portion 312, and third storage portion 313 is composed of a plurality of pallet racks 32. First storage portion 311 stores a plurality of first pallets PA. Second storage portion 312 stores a plurality of second pallets PB. Third storage portion 313 stores a plurality of third pallets PC. As first storage portion 311, second storage portion 312, and third storage portion 313 are set to sizes matched to the pallet sizes of the pallets stored in the respective storage portions, pallet handling system 100F can be configured compactly.

The plurality of pallet racks 32 that constitute each of first storage portion 311, second storage portion 312, and third storage portion 313 are contiguously arranged. First machine tool 21A, third machine tool 21C, and second machine tool 21B are arranged in the X-axis direction from the right side to the left side of the drawing sheet showing Fig. 1, in the stated order. In this configuration, first storage portion 311, which stores first pallets PA mounted on first machine tool 21A, third storage portion 313, which stores third pallets PC mounted on third machine tool 21C, and second storage portion 312, which stores second pallets PB mounted on second machine tool 21B, may be arranged in the X-axis direction from the right side to the left side of the drawing sheet showing Fig. 1, in the stated order.

Pallet handling system 100F further includes a setup station 36 and an intermediate attachment stocker 33.

Setup station 36 is a device primarily for attaching and detaching a workpiece to and from pallet P. Setup station 36 includes a pallet placement stand 37. Pallet P is placed on pallet placement stand 37.

Setup station 36 is disposed along base 12. In a top view of pallet handling system 100F, setup station 36 is disposed such that pallet placement stand 37 faces base 12 in the Z-axis direction. In the X-axis direction, setup station 36 is provided alongside a plurality of machine tools 21.

Intermediate attachment stocker 33 is capable of storing a plurality of intermediate attachments 70, which will be described later. Intermediate attachment stocker 33 includes a plurality of intermediate pallet placement stands (not shown) on which the plurality of intermediate attachments 70 can be respectively placed.

Intermediate attachment stocker 33 is disposed along base 12. In a top view of pallet handling system 100F, intermediate attachment stocker 33 is disposed such that the intermediate attachment placement stand (not shown) faces base 12 in the Z-axis direction. Intermediate attachment stocker 33 is provided in the X-axis direction alongside the plurality of machine tools 21. Intermediate attachment stocker 33 is provided in the X-axis direction between first machine tool 21A and setup station 36.

Pallet conveyance device 10 conveys pallets P to and from machine tools 21, pallet stocker 31, and setup station 36. Pallet conveyance device 10 conveys pallet P between each of the plurality of machine tools 21, pallet stocker 31, and setup station 36. Pallet conveyance device 10 causes intermediate attachments 70 to enter or exit intermediate attachment stocker 33. The space in which pallets P are conveyed is enclosed by a fence 16.

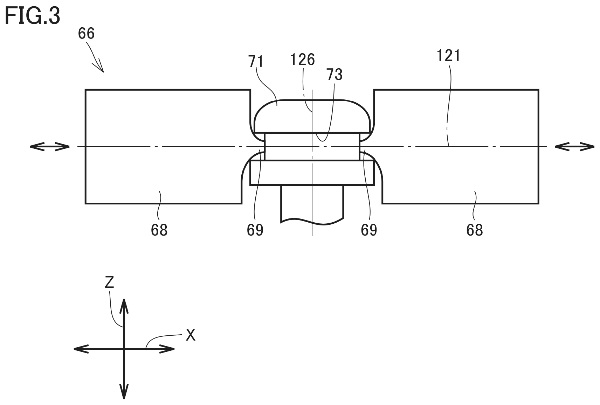

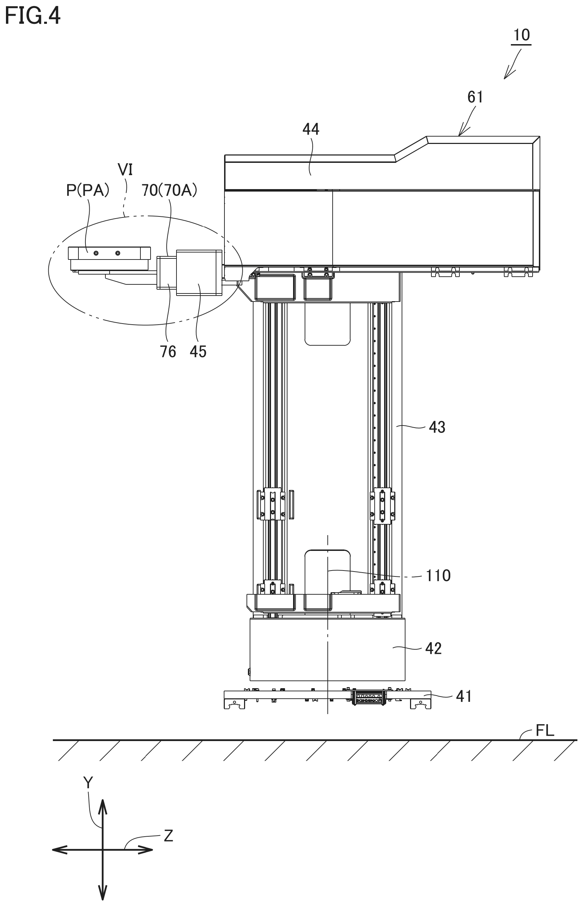

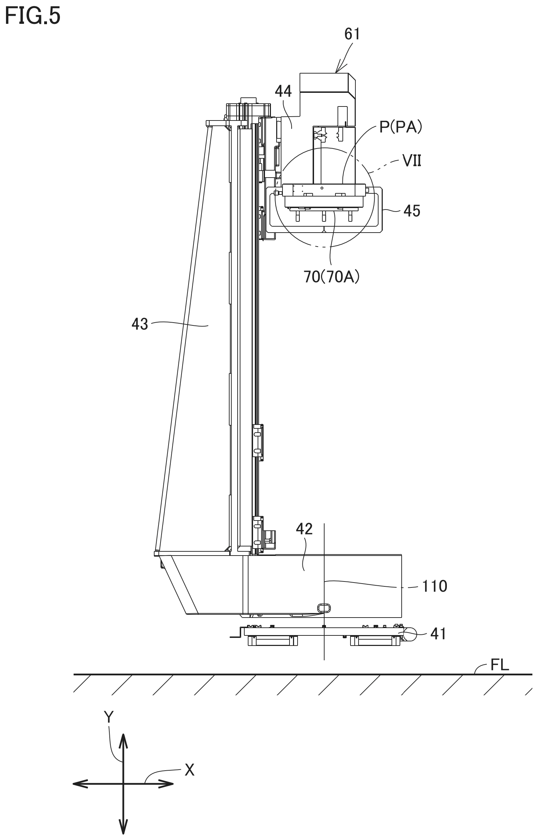

Fig. 3 is a diagram showing the internal structure of the hand in the pallet conveyance device of Fig. 1. Figs. 4 and 5 are side views of the pallet conveyance device of Fig. 1 (during conveyance of the first pallet).

Note that Figs. 2 to 5 and Figs. 6 to 13, which will be described later, show the X-axis, Y-axis, and Z-axis corresponding to the orientation of pallet conveyance device 10 in conveyance of pallet P to machine tool 21.

Referring to Figs. 1 to 5, conveyance body 61 includes a travel base 41, a swivel base 42, a column 43, a slide body 44, and a hand 45.

Travel base 41 is disposed to face base 12 in the axial direction of the Y-axis (corresponding to the up-down direction, and also referred to as a "Y-axis direction" below). Travel base 41 is connected to base 12 via a guide mechanism, such as a linear guide, and a feed mechanism, such as a motor and a rack and pinion. Travel base 41 is capable of moving (traveling) in the X-axis direction relative to base 12.

Swivel base 42 is disposed to face travel base 41 in the Y-axis direction. Swivel base 42 is connected to travel base 41 via a rotational mechanism, such as a motor and a gear. Swivel base 42 is capable of swiveling about a swivel center axis 110 extending in the Y-axis direction relative to travel base 41. Column 43 is connected to swivel base 42. Column 43 has a columnar shape rising from swivel base 42.

Slide body 44 is connected to column 43 via a guide mechanism, such as a linear guide, and a feed mechanism, such as a motor and a rack and pinion. Slide body 44 is movable in the Y-axis direction relative to column 43.

Hand 45 is connected to slide body 44 via a guide mechanism, such as a linear guide, and a feed mechanism, such as a motor and a rack and pinion. Hand 45 is movable in the horizontal direction relative to slide body 44. An intermediate attachment 70 for supporting pallet P is attached to hand 45.

Note that the conveyance body in the present invention is not limited to the configuration of conveyance body 61 described above, and for example, it may be formed of a robot capable of swiveling. In such a configuration, the plurality of machine tools 21, pallet stocker 31, setup station 36, and intermediate attachment stocker 33 may be disposed side by side circumferentially about the robot.

Pallet conveyance device 10 includes a plurality of intermediate attachments 70 (first intermediate attachment 70A, second intermediate attachment 70B, third intermediate attachment 70C). One of first intermediate attachment 70A, second intermediate attachment 70B, and third intermediate attachment 70C is attachable to conveyance body 61.

As shown in Fig. 2, during conveyance of first pallet PA by pallet conveyance device 10, first intermediate attachment 70A is attached to conveyance body 61. During conveyance of second pallet PB by pallet conveyance device 10, second intermediate attachment 70B is attached to conveyance body 61. During conveyance of third pallet PC by pallet conveyance device 10, third intermediate attachment 70C is attached to conveyance body 61.

The conveyance of first pallet PA by pallet conveyance device 10, the conveyance of second pallet PB by pallet conveyance device 10, and the conveyance of third pallet PC by pallet conveyance device 10 are controlled by a common controller.

As shown in Figs. 2 and 3, first intermediate attachment 70A includes a first gripping portion 71A. Second intermediate attachment 70B includes a second gripping portion 71B. Third intermediate attachment 70C includes a third gripping portion 71C. First gripping portion 71A, second gripping portion 71B, and third gripping portion 71C have an identical shape. (Hereinafter, when first gripping portion 71A, second gripping portion 71B, and third gripping portion 71C are not specifically distinguished from one another, they are referred to as "gripping portion 71".) Intermediate attachment 70 includes a plurality of gripping portions 71. The number of gripping portions 71 provided in intermediate attachment 70 is not particularly limited.

Gripping portion 71 has a grip shape about central axis 126. Central axis 126 extends in the horizontal direction (the Z-axis direction in Figs. 2 and 3). A groove portion 73 is provided in gripping portion 71. Groove portion 73 has a groove shape recessed from the outer peripheral surface of gripping portion 71 and extending circumferentially about central axis 126.

Hand 45 has the appearance of a block body. An insertion hole 46 is provided in hand 45. Insertion hole 46 is open in the Z-axis direction. Gripping portion 71 is inserted into insertion hole 46.

Conveyance body 61 (hand 45) includes a first actuator 66. First actuator 66 is built in hand 45. First actuator 66 includes a clamping device capable of operating between a first state of gripping gripping portion 71 and a second state of releasing the gripped gripping portion 71.

An example of the configuration of first actuator 66 will be described. First actuator 66 includes a cylinder piston including a pair of pistons 68 and an elastic body (not shown) such as a spring. The pair of pistons 68 extend in a shaft shape along a central axis 121 that extends in the X-axis direction and intersects insertion hole 46. The pair of pistons 68 face each other while being spaced apart from each other in the axial direction of central axis 121. The pair of pistons 68 are supported so as to be slidable in the axial direction of central axis 121. A projection 69 capable of engaging with groove portion 73 is provided at the tip of each piston 68. The elastic body exerts an elastic force so as to bring the pair of pistons 68 toward each other. The pair of pistons 68 are held at a position at which projections 69 retract from insertion holes 46 by supplying fluid pressure, such as hydraulic or pneumatic pressure, to the piston cylinder.

In attachment of intermediate attachment 70 to conveyance body 61, hand 45 is positioned such that the opening of insertion hole 46 faces gripping portion 71. As hand 45 is moved in the Z-axis direction, gripping portion 71 is inserted into insertion hole 46. As the supply of fluid pressure to the piston cylinder is stopped, the pair of pistons 68 are moved toward each other. As a result, projections 69 of the pair of pistons 68 enter insertion holes 46 and engage with groove portion 73. This results in the first state in which first actuator 66 grips gripping portion 71.

In detachment of intermediate attachment 70 from conveyance body 61, fluid pressure is supplied to the piston cylinder to move the pair of pistons 68 away from each other. Consequently, projections 69 of the pair of pistons 68 disengage from groove portion 73. This results in the second state in which first actuator 66 releases gripping portion 71. As hand 45 is moved in the Z-axis direction, gripping portion 71 is removed from insertion hole 46.

As shown in Fig. 2, first intermediate attachment 70A further includes a first support portion 72A. First support portion 72A is capable of supporting first pallet PA. Second intermediate attachment 70B further includes a second support portion 72B. Second support portion 72B is capable of supporting second pallet PB. Third intermediate attachment 70C further includes a third support portion 72C. Third support portion 72C is capable of supporting third pallet PC.

First support portion 72A, second support portion 72B, and third support portion 72C have different shapes. First support portion 72A, second support portion 72B, and third support portion 72C have different sizes. The positional relationship of first support portion 72A to first gripping portion 71A in first intermediate attachment 70A, the positional relationship of second support portion 72B to second gripping portion 71B in second intermediate attachment 70B, and the positional relationship of third support portion 72C to third gripping portion 71C in third intermediate attachment 70C differ from one another.

Specific structures of first intermediate attachment 70A, second intermediate attachment 70B, and third intermediate attachment 70C will be described below in order.

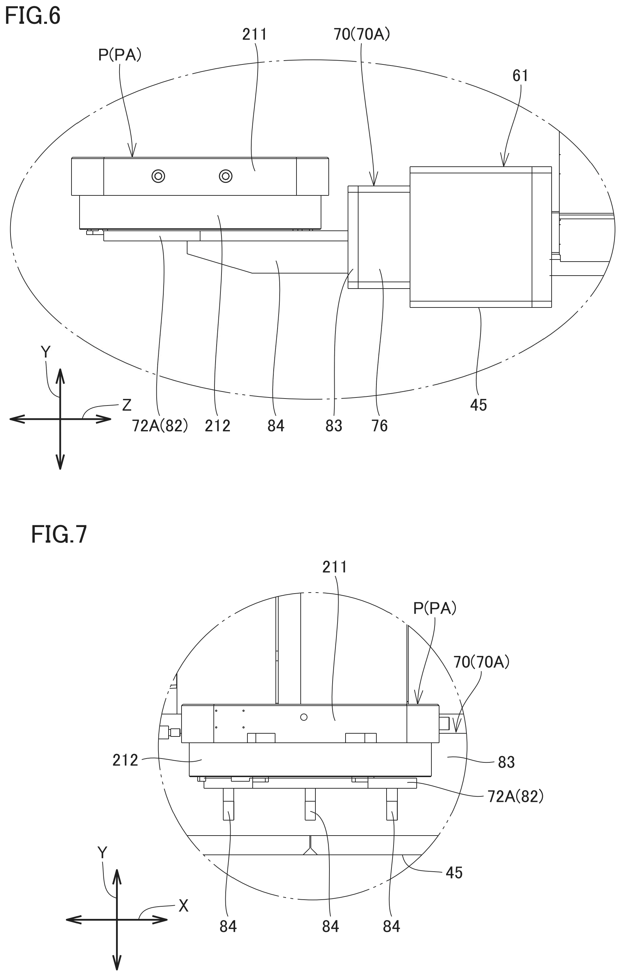

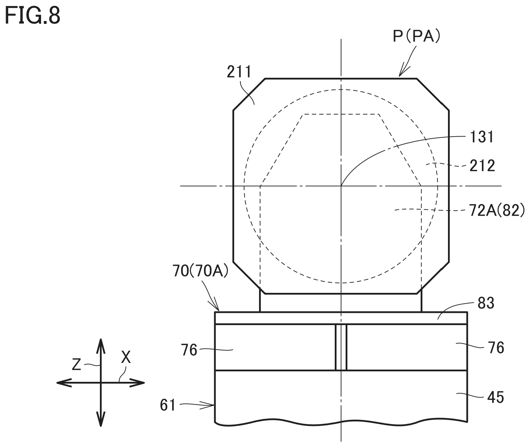

Fig. 6 is a side view of the pallet conveyance device within the area enclosed by a double-dashed line VI in Fig. 4 (during conveyance of the first pallet using the first intermediate attachment). Fig. 7 is a side view of the pallet conveyance device within the area enclosed by a double-dashed line VII in Fig. 5 (during conveyance of the first pallet using the first intermediate attachment). Fig. 8 is a top view of the pallet conveyance device of Figs. 6 and 7 (during conveyance of the first pallet using the first intermediate attachment).

Referring to Figs. 2 and 4 to 8, first intermediate attachment 70A includes a first placement portion 82 as first support portion 72A. First pallet PA is placed on first placement portion 82. Protruding portion 212 of first pallet PA is placed on first placement portion 82.

First intermediate attachment 70A further includes an attachment plate 83 and a plurality of beam portions 84. Attachment plate 83 has a plate shape in which the Z-axis direction corresponds to the thickness direction. Beam portion 84 extends from attachment plate 83 in the Z-axis direction. The plurality of beam portions 84 are spaced apart from each other in the X-axis direction.

First placement portion 82 has a plate shape disposed parallel to the horizontal plane (X-axis-Z-axis plane). First placement portion 82 extends from attachment plate 83 in the Z-axis direction. First placement portion 82 is connected to the upper surface of beam portion 84. First placement portion 82 is supported from below by the plurality of beam portions 84. First placement portion 82 is provided with a cut-away part to avoid a tapered cone, a coupler, or the like provided in protruding portion 212 of first pallet PA.

First gripping portion 71A is attached to attachment plate 83 via a block 76. Attachment plate 83 is positioned between first placement portion 82 and first gripping portion 71A in the Z-axis direction. First placement portion 82 and first gripping portion 71A are provided within the same horizontal plane (X-axis-Z-axis plane).

First pallet PA is supported by first support portion 72A as protruding portion 212 of first pallet PA is placed on first placement portion 82. In a top view of first intermediate attachment 70A shown in Fig. 8, protruding portion 212 and first placement portion 82 overlap each other. A pallet center 131 of first pallet PA overlaps first placement portion 82. The manner of supporting first pallet PA by first intermediate attachment 70A described above corresponds to "placement + support of the pallet central portion".

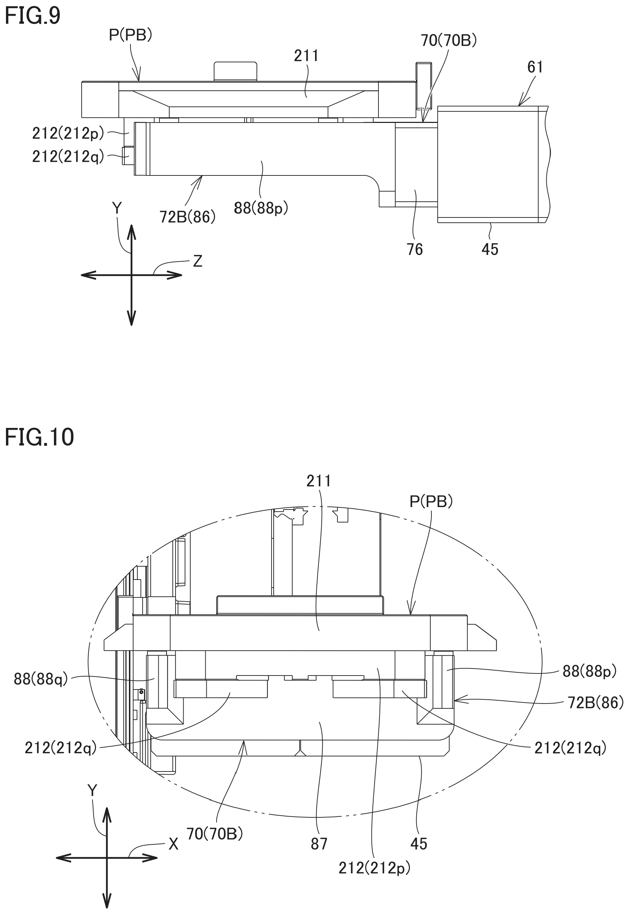

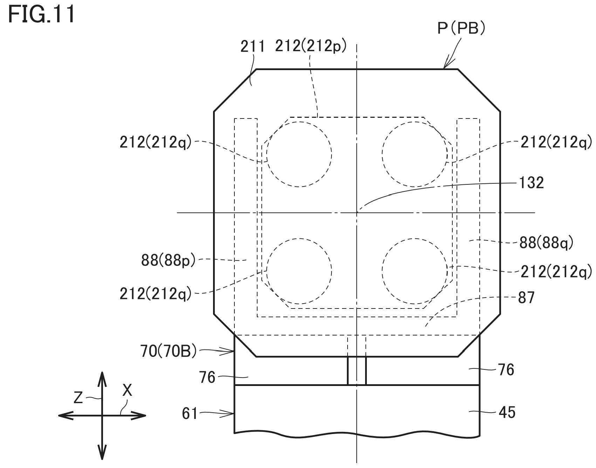

Figs. 9 and 10 are side views of the pallet conveyance device (during conveyance of the second pallet using the second intermediate attachment). Figs. 9 and 10 show the areas corresponding to Figs. 6 and 7, respectively. Fig. 11 is a top view of the pallet conveyance device (during conveyance of the second pallet using the second intermediate attachment).

Referring to Figs. 2 and 9 to 11, second intermediate attachment 70B includes a second placement portion 86 as second support portion 72B. Second pallet PB is placed on second placement portion 86. Plate portion 211 of second pallet PB is placed on second placement portion 86.

Second placement portion 86 includes a base 87 and a pair of arm portions 88 (88p, 88q). Base 87 extends in the X-axis direction. Arm portions 88 extend in the Z-axis direction. Arm portion 88p and arm portion 88q are spaced apart from each other in the X-axis direction. One end of arm portion 88p in the Z-axis direction is contiguous to one end of base 87 in the X-axis direction. One end of arm portion 88q in the Z-axis direction is contiguous to the other end of base 87 in the X-axis direction.

Second gripping portion 71B is attached to base 87 via block 76. Base 87 is positioned between arm portion 88 and second gripping portion 71B in the Z-axis direction. Second placement portion 86 and second gripping portion 71B are provided within the same horizontal plane (X-axis-Z-axis plane).

As plate portion 211 of second pallet PB is placed on the second placement portion 86, second pallet PB is supported by second support portion 72B. In a top view of second intermediate attachment 70B shown in Fig. 11, the bottom surface of plate portion 211 exposed from protruding portion 212 and second placement portion 86 overlap each other. A pallet center 132 of second pallet PB does not overlap second placement portion 86. Protruding portion 212 is positioned between arm portions 88p and 88q in the X-axis direction. The manner of supporting second pallet PB by second intermediate attachment 70B described above corresponds to "placement + support of both ends of the pallet".

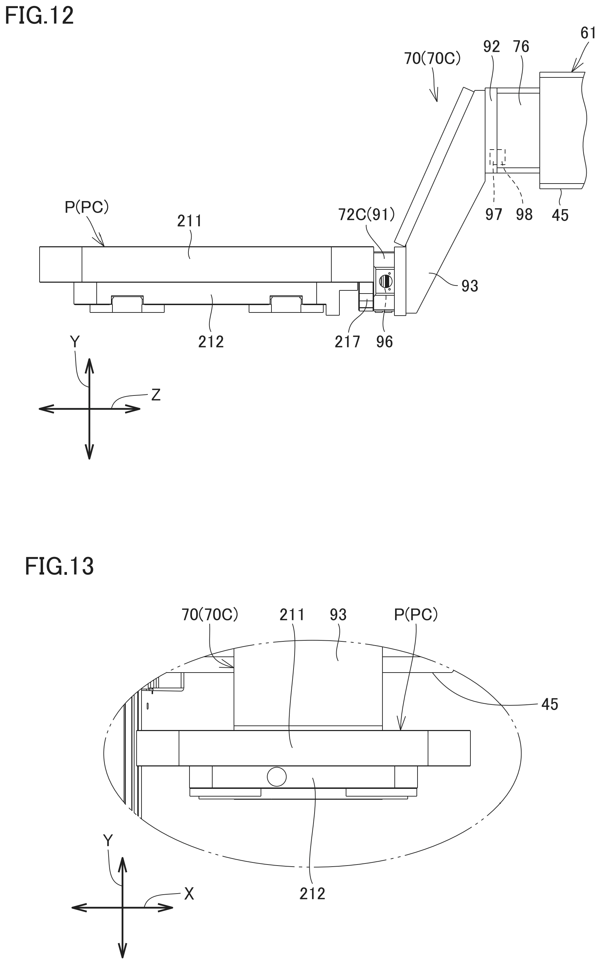

Figs. 12 and 13 are side views of the pallet conveyance device (during conveyance of the third pallet using the third intermediate attachment). Figs. 12 and 13 show areas corresponding to Figs. 6 and 7, respectively.

Referring to Figs. 2, 13, and 14, third intermediate attachment 70C includes a pallet hand 91 as third support portion 72C. Third pallet PC is attached to pallet hand 91. Plate portion 211 of third pallet PC is attached to pallet hand 91.

Third intermediate attachment 70C further includes an attachment plate 92 and a bar 93. Attachment plate 92 has a plate shape in which the Z-axis direction corresponds to the thickness direction. Bar 93 extends from attachment plate 92 in a diagonally downward direction including the Z-axis direction. Pallet hand 91 is connected to a tip of bar 93.

Third gripping portion 71C is attached to attachment plate 92 via block 76. Attachment plate 92 is positioned between pallet hand 91 and third gripping portion 71C in the Z-axis direction. Pallet hand 91 is disposed below third gripping portion 71C.

A gripping portion 216 is attached to third pallet PC via a block 217. Gripping portion 216 is provided on the side surface of plate portion 211 of third pallet PC. Gripping portion 216 has a grip shape that protrudes in the Z-axis direction from the side surface of plate portion 211 of third pallet PC.

Pallet hand 91 includes a second actuator 96. Second actuator 96 is built in pallet hand 91. Second actuator 96 includes a clamping device capable of operating between a third state of gripping gripping portion 216 and a fourth state of releasing the gripped gripping portion 216.

Gripping portion 216 corresponds to gripping portion 71 in intermediate attachment 70, and second actuator 96 corresponds to first actuator 66 built in hand 45. The mechanism for gripping gripping portion 216 by second actuator 96 is the same as the mechanism for gripping gripping portion 71 by first actuator 66 described with reference to Fig. 3.

Third intermediate attachment 70C includes a first coupler 97. First coupler 97 is provided on block 76. Conveyance body 61 includes a second coupler 98. Second coupler 98 is provided on hand 45. First coupler 97 and second coupler 98 serve as connectors for, for example, piping or wiring through which air, electricity, or the like flows to operate second actuator 96. When third intermediate attachment 70C is attached to hand 45, first coupler 97 and second coupler 98 are connected to each other. This enables the supply of air, electricity, or the like from conveyance body 61 toward second actuator 96. The manner of supporting third pallet PC by third intermediate attachment 70C, as described above, corresponds to "attachment by the actuator".

The gripping force of gripping portion 71 by first actuator 66 may be greater than the gripping force of gripping portion 216 by second actuator 96. The gripping force of gripping portion 71 by first actuator 66 is determined based on the maximum load capacity expected for pallet conveyance device 10, whereas the gripping force of gripping portion 216 by second actuator 96 is determined based on the maximum load capacity during conveyance of a workpiece by third pallet PC. As the gripping forces of first actuator 66 and second actuator 96 satisfy the above-described magnitude relationship, over-specifications of second actuator 96 can be prevented.

Referring to Figs. 1 to 13, for example, assume a case where first pallet PA, to which an unmachined workpiece has been attached at setup station 36, is conveyed to first machine tool 21A in pallet handling system 100F.

In this case, first, conveyance body 61 is moved such that, in a top view of pallet handling system 100F, hand 45 faces first intermediate attachment 70A stored in intermediate attachment stocker 33 in the Z-axis direction. Hand 45 is caused to move in the Z-axis direction to enter intermediate attachment stocker 33. As first actuator 66 is operated to enter the first state, first intermediate attachment 70A is attached to hand 45. As hand 45 is moved in the Z-axis direction, first intermediate attachment 70A is caused to exit intermediate attachment stocker 33.

Subsequently, conveyance body 61 is operated such that, in a top view of pallet handling system 100F, hand 45 faces pallet placement stand 37 of setup station 36 in the Z-axis direction. As hand 45 is moved in the Z-axis direction, first placement portion 82 of first intermediate attachment 70A is caused to enter directly below protruding portion 212 of first pallet PA. As hand 45 is raised along the Y-axis direction, first pallet PA is lifted by first placement portion 82. As hand 45 is moved in the Z-axis direction, first pallet PA is caused to exit setup station 36.

Subsequently, conveyance body 61 is operated such that, in a top view of pallet handling system 100F, hand 45 faces pallet placement stand 26 of first machine tool 21A in the Z-axis direction. As hand 45 is moved in the Z-axis direction, first pallet PA is caused to enter directly above pallet placement stand 26. As hand 45 is lowered along the Y-axis direction, first pallet PA is placed on pallet placement stand 26. As hand 45 is moved in the Z-axis direction, first intermediate attachment 70A is caused to exit first machine tool 21A.

Furthermore, assume a case where second pallet PB is conveyed following the conveyance of first pallet PA in pallet handling system 100F.

In this case, conveyance body 61 is operated such that, in a top view of pallet handling system 100F, hand 45 faces the placement stand (not shown) for first intermediate attachment 70A in intermediate attachment stocker 33 in the Z-axis direction. As hand 45 is moved in the Z-axis direction, first intermediate attachment 70A is caused to be positioned onto the placement stand for first intermediate attachment 70A. As first actuator 66 is operated to enter the second state, first intermediate attachment 70A is removed from hand 45 and is placed on the placement stand for first intermediate attachment 70A.

Conveyance body 61 is operated such that, in a top view of pallet handling system 100F, hand 45 faces the placement stand (not shown) for second intermediate attachment 70B in intermediate attachment stocker 33 in the Z-axis direction. Hand 45 is moved in the Z-axis direction toward second intermediate attachment 70B. As first actuator 66 is operated to enter the first state, second intermediate attachment 70B is attached to hand 45.

Subsequently, using second intermediate attachment 70B attached to hand 45, second pallet PB is conveyed between second machine tool 21B, setup station 36, and pallet stocker 31.

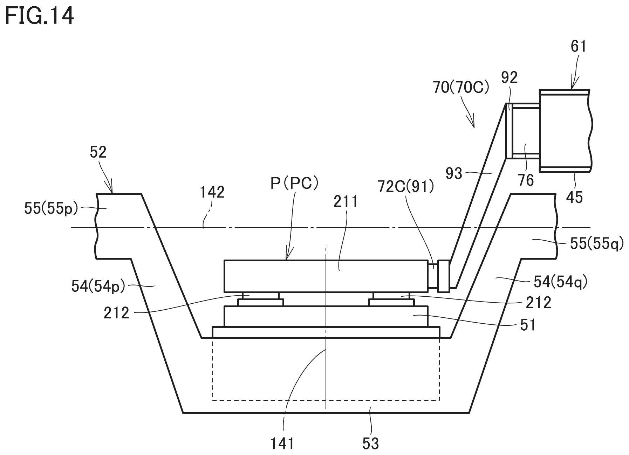

Fig. 14 is a side view showing a modification of the third machine tool shown in Fig. 1. Referring to Fig. 14, in this modification, third machine tool 21C includes a table 51 and a swivel arm 52. Table 51 holds third pallet PC by means of a clamping device built in table 51. Table 51 includes a swivel mechanism that causes third pallet PC to swivel about a swivel center axis 141 (C-axis) passing through the center of third pallet PC.

Table 51 is attached to swivel arm 52. Swivel arm 52 swivels about swivel center axis 142 (A-axis) to move table 51 circumferentially about swivel center axis 142 (A-axis). Swivel center axis 142 extends in the horizontal direction and the direction perpendicular to swivel center axis 141.

Swivel arm 52 includes a pair of shaft portions 55 (55p, 55q), a pair of arm portions 54 (54p, 54q), and a table attachment portion 53. Shaft portions 55 are supported to be rotatable about swivel center axis 142. Shaft portions 55p and 55q are spaced apart from each other in the axial direction of swivel center axis 142. Table attachment portion 53 is provided at a position radially spaced from swivel center axis 142 about swivel center axis 142. Table 51 is attached to table attachment portion 53. The pair of arm portions 54 extend between table attachment portion 53 and the pair of shaft portions 55. Arm portion 54p extends from one end of table attachment portion 53 in the axial direction of swivel center axis 142 toward shaft portion 55p, axially and radially of swivel center axis 142. Arm portion 54q extends from the other end of table attachment portion 53 in the axial direction of swivel center axis 142 toward shaft portion 55q, axially and radially of swivel center axis 142.

To third machine tool 21C having this configuration, pallet conveyance device 10 conveys third pallet PC using third intermediate attachment 70C. Third machine tool 21C is disposed such that the entry direction (Z-axis direction) of third intermediate attachment 70C relative to third machine tool 21C is parallel to swivel center axis 142 (A-axis).

Third intermediate attachment 70C has a shape that extends diagonally downward from block 76 toward pallet hand 91, which corresponds to the above-described shape of arm portion 54. With this configuration, pallet hand 91 can be caused to approach gripping portion 216 disposed on the side surface of third pallet PC without third intermediate attachment 70C interfering with swivel arm 52.

To summarize the configuration of pallet conveyance device 10 in Embodiment 1 of the present invention described above, pallet conveyance device 10 in the present embodiment includes the plurality of intermediate attachments 70 capable of supporting pallets P of different types, and conveyance body 61 to which one of the plurality of intermediate attachments 70 is selectively attachable and which conveys pallet P.

With this configuration, pallets P of different types can be supported by replacing intermediate attachment 70 attached to conveyance body 61. This enables conveyance of a variety of pallets using a common pallet conveyance device 10.

Furthermore, first intermediate attachment 70A of the plurality of intermediate attachments 70 includes first gripping portion 71A. Second intermediate attachment 70B of the plurality of intermediate attachments 70 includes second gripping portion 71B having a shape identical to that of first gripping portion 7 1A. Conveyance body 61 includes first actuator 66 capable of operating between a first state of gripping each gripping portion 71 of first gripping portion 71A and second gripping portion 71B, and a second state of releasing the gripped gripping portions 71.

With this configuration, each intermediate attachment 70 of first intermediate attachment 70A and second intermediate attachment 70B is attachable to conveyance body 61 using a common first actuator 66.

Furthermore, first intermediate attachment 70A of the plurality of intermediate attachments 70 includes first placement portion 82 on which first pallet PA is placed. Second intermediate attachment 70B of the plurality of intermediate attachments 70 includes second placement portion 86 on which second pallet PB, which differs from first pallet PA in pallet size and/or pallet bottom shape, is placed.

With this configuration, first intermediate attachment 70A and second intermediate attachment 70B can be used to support first pallet PA and second pallet PB, respectively, which differ in pallet size and/or pallet bottom shape.

Furthermore, third intermediate attachment 70C of the plurality of intermediate attachments includes second actuator 96 capable of operating between the third state of gripping gripping portion 216 provided on third pallet PC, and the fourth state of releasing the gripped gripping portion 216.

With this configuration, third intermediate attachment 70C can be used to support third pallet PC including gripping portion 216 serving as attachment means.

Furthermore, pallet handling system 100F in the present embodiment includes: first machine tool 21A, second machine tool 21B, and third machine tool 21C, on which pallets P of different types are mounted and which serve as the plurality of machine tools 21; pallet stocker 31 for storing the plurality of pallets P; and pallet conveyance device 10 that transports a pallet between each of first machine tool 21A, second machine tool 21B, and third machine tool 21C, and pallet stocker 31.

With this configuration, pallets P of different types can be conveyed using a common pallet conveyance device 10, reducing the equipment cost of pallet handling system 100F and improving the utilization efficiency of the space of a factory or the like where pallet handling system 100F is installed.

### (Embodiment 2)

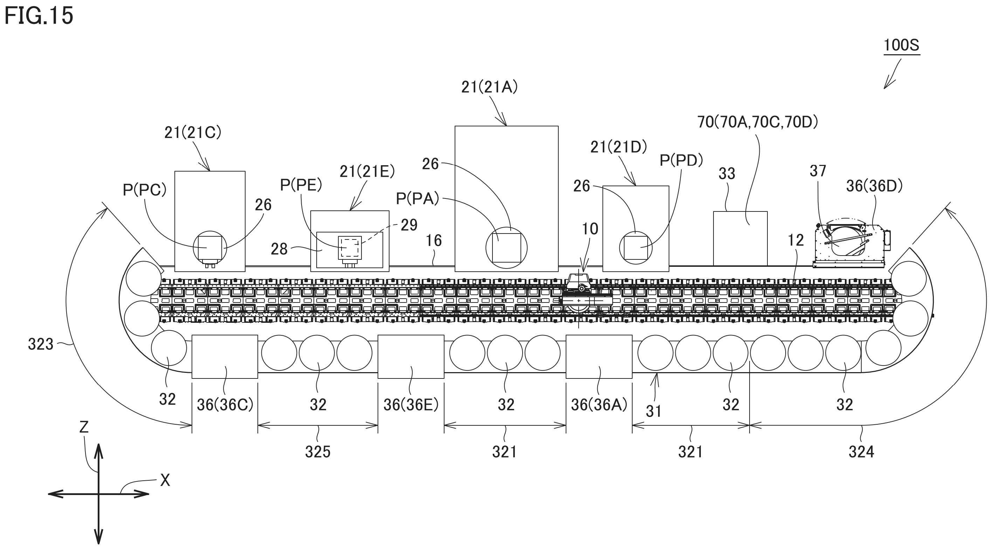

Fig. 15 is a top view of a pallet handling system in Embodiment 2 of the present invention. A pallet handling system 100S in the present embodiment has a configuration essentially the same as that of pallet handling system 100F in Embodiment 1. Descriptions of redundant configurations will not be repeated below.

Referring to Fig. 15, pallet handling system 100S includes a plurality of machine tools 21 (first machine tool 21A, third machine tool 21C, fourth machine tool 21D, fifth machine tool 21E), pallet stocker 31, and pallet conveyance device 10.

First machine tool 21A is a horizontal machining center similar to first machine tool 21A in Embodiment 1. The pallet size of first pallet PA mounted on first machine tool 21A is 500 mm × 500 mm.

Third machine tool 21C is a 5-axis machine similar to third machine tool 21C in Embodiment 1. Gripping portion 216 shown in Fig. 2 is attached to the side surface of third pallet PC mounted on third machine tool 21C.

Fourth machine tool 21D is a horizontal machining center. A fourth pallet PD is mounted on fourth machine tool 21D. The pallet size of fourth pallet PD is 400 mm × 400 mm. Fourth pallet PD includes protruding portion 212 of the same shape as that of first pallet PA shown in Fig. 8. On the other hand, for example, the size of protruding portion 212 or the positions of the tapered cone or the coupler on fourth pallet PD differ from those of first pallet PA.

Fifth machine tool 21E is a vertical machining center. A fifth pallet PE is mounted on fifth machine tool 21E.

Pallet stocker 31 includes a first storage portion 321, a third storage portion 323, a fourth storage portion 324, and a fifth storage portion 325. First storage portion 321, third storage portion 323, fourth storage portion 324, and fifth storage portion 325 store a plurality of first pallets PA, a plurality of third pallets PC, a plurality of fourth pallets PD, and a plurality of fifth pallets PE, respectively.

Pallet handling system 100S includes a plurality of setup stations 36 (36A, 36C, 36D, 36E) and intermediate attachment stocker 33.

A first pallet PA, a third pallet PC, a fourth pallet PD, and a fifth pallet PE are conveyed to setup stations 36A, 36C, 36D, and 36E, respectively. Intermediate attachment stocker 33 stores a plurality of intermediate attachments 70, which will be described later.

Pallet conveyance device 10 includes the plurality of intermediate attachments 70 (first intermediate attachment 70A, third intermediate attachment 70C, fourth intermediate attachment 70D). One of first intermediate attachment 70A, third intermediate attachment 70C, and fourth intermediate attachment 70D is attachable to conveyance body 61.

During conveyance of first pallet PA by pallet conveyance device 10, first intermediate attachment 70A shown in Fig. 2 is attached to conveyance body 61. First intermediate attachment 70A supports first pallet PA in the manner of "placement + support of the pallet central portion" described in Embodiment 1.

During conveyance of third pallet PC by pallet conveyance device 10, third intermediate attachment 70C shown in Fig. 2 is attached to conveyance body 61. Third intermediate attachment 70C supports third pallet PC in the manner of "attachment by the actuator" described in Embodiment 1.

During conveyance of fourth pallet PD by pallet conveyance device 10, fourth intermediate attachment 70D is attached to conveyance body 61. Fourth intermediate attachment 70D has the same shape as that of first intermediate attachment 70A. On the other hand, in fourth intermediate attachment 70D, for example, the size of first placement portion 82 or the position of the cut-away part provided in first placement portion 82 differs from that in first intermediate attachment 70A. Fourth intermediate attachment 70D supports fourth pallet PD in the manner of "placement + support of the pallet central portion".

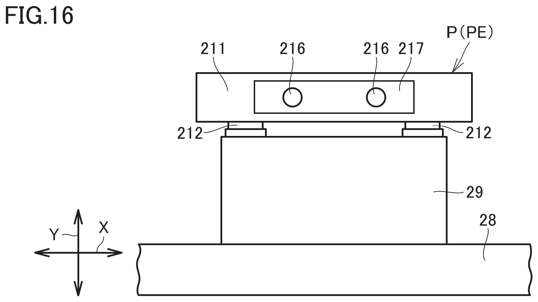

Fig. 16 is a front view of the fifth machine tool shown in Fig. 15. Referring to Figs. 15 and 16, gripping portion 216 shown in Fig. 2 is attached to the side surface of fifth pallet PE mounted on fifth machine tool 21E. The pallet size of fifth pallet PE may differ from that of third pallet PC.

During conveyance of fifth pallet PE by pallet conveyance device 10, third intermediate attachment 70C is attached to conveyance body 61. Third intermediate attachment 70C supports fifth pallet PE in the manner of "attachment by the actuator". Third pallet PC mounted on third machine tool 21C and fifth pallet PE mounted on fifth machine tool 21E are conveyed using a common third intermediate attachment 70C.

Fifth machine tool 21E includes a table 28 and an actuator 29. Actuator 29 is attached to table 28. Actuator 29 is formed of a clamping device capable of operating between a first state of holding fifth pallet PE and a second state of releasing the held fifth pallet PE.

For example, when fifth pallet PE is conveyed from fifth machine tool 21E by pallet conveyance device 10, conveyance body 61 is moved such that, in a top view of pallet handling system 100S, hand 45 faces table 28 of fifth machine tool 21E in the Z-axis direction. As hand 45 is moved toward fifth pallet PE and second actuator 96 is operated to enter the third state, fifth pallet PE is attached to third intermediate attachment 70C. As actuator 29 is operated to enter the second state, fifth pallet PE is released from actuator 29. As hand 45 is moved, fifth pallet PE supported by third intermediate attachment 70C is caused to exit fifth machine tool 21E.

Fifth machine tool 21E, which is a vertical machining center, is not equipped with an automatic pallet changer. Even with this configuration, as actuator 29 capable of detachably holding fifth pallet PE on table 28 is provided, fifth pallet PE can be conveyed using pallet conveyance device 10 in fifth machine tool 21E.

Pallet handling system 100S according to Embodiment 2 of the present invention described above can achieve effects similar to those of pallet handling system 100F in Embodiment 1.

### (Embodiment 3)

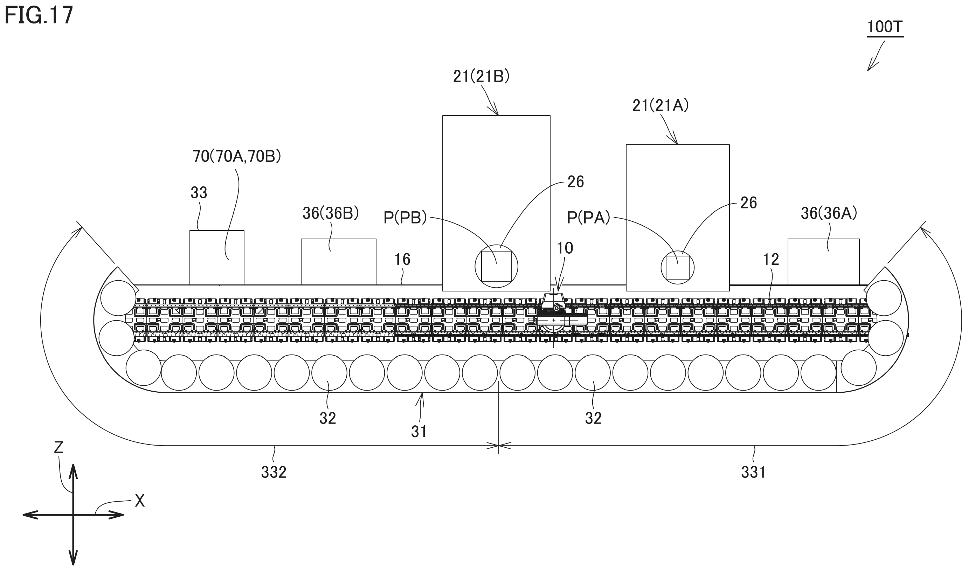

Fig. 17 is a top view of a pallet handling system in Embodiment 3 of the present invention. A pallet handling system 100T in the present embodiment has a configuration essentially the same as that of pallet handling system 100F in Embodiment 1. Descriptions of redundant configurations will not be repeated below.

Referring to Fig. 17, pallet handling system 100T includes a plurality of machine tools 21 (first machine tool 21A, second machine tool 21B), pallet stocker 31, and pallet conveyance device 10.

First machine tool 21A is a horizontal machining center similar to first machine tool 21A in Embodiment 1. The pallet size of first pallet PA mounted on first machine tool 21A is 500 mm × 500 mm.

Second machine tool 21B is a horizontal machining center. The pallet size of second pallet PB mounted on second machine tool 21B is 630 mm × 630 mm.

Pallet stocker 31 includes a first storage portion 331 and a second storage portion 332. First storage portion 331 and second storage portion 332 store a plurality of first pallets PA and a plurality of second pallets PB, respectively.

Pallet handling system 100T includes a plurality of setup stations 36 (36A, 36B) and intermediate attachment stocker 33.

First pallet PA and second pallet PB are conveyed to setup station 36A and setup station 36B, respectively. Intermediate attachment stocker 33 stores a plurality of intermediate attachments 70, which will be described later.

Pallet conveyance device 10 includes a plurality of intermediate attachments 70 (first intermediate attachment 70A, second intermediate attachment 70B). One of first intermediate attachment 70A and second intermediate attachment 70B is attachable to conveyance body 61.

During conveyance of first pallet PA by pallet conveyance device 10, first intermediate attachment 70A shown in Fig. 2 is attached to conveyance body 61. First intermediate attachment 70A supports first pallet PA in the manner of "placement + support of the pallet central portion" described in Embodiment 1.

During conveyance of second pallet PB by pallet conveyance device 10, second intermediate attachment 70B shown in Fig. 2 is attached to conveyance body 61. Second intermediate attachment 70B supports second pallet PB in the manner of "placement + support of both ends of the pallet" described in Embodiment 1.

Pallet handling system 100T according to Embodiment 3 of the present invention, configured in this manner, can achieve effects similar to those of pallet handling system 100F in Embodiment 1.

Although the embodiments of the present invention have been described, it should be understood that the embodiments disclosed herein have been presented for the purpose of illustration and non-restrictive in every respect. It is therefore intended that the scope of the present invention is defined by claims, and encompasses all modifications and variations equivalent in meaning and scope to the claims.

## Claims

1. A pallet conveyance device comprising:
a plurality of intermediate attachments (70) that support pallets of different types; and
a conveyance body (61) to which one of the plurality of intermediate attachments (70) is selectively attachable and which conveys a pallet (P).

2. The pallet conveyance device according to claim 1, wherein
a first intermediate attachment (70A) of the plurality of intermediate attachments (70) includes a first gripping portion (71A),
a second intermediate attachment (70B) of the plurality of intermediate attachments (70) includes a second gripping portion (71B) having a shape identical to that of the first gripping portion (71A), and
the conveyance body (61) includes a first actuator (66) operable between a first state of gripping each gripping portion (71) of the first gripping portion (71A) and the second gripping portion (71B) and a second state of releasing the gripped gripping portion (71).

3. The pallet conveyance device according to claim 1 or 2, wherein
a first intermediate attachment (70A) of the plurality of intermediate attachments (70) includes a first placement portion (82) on which a first pallet (PA) is placed, and
a second intermediate attachment (70B) of the plurality of intermediate attachments (70) includes a second placement portion (86) on which a second pallet (PB) is placed, the second pallet (PB) differing from the first pallet (PA) in pallet size and/or pallet bottom shape.

4. The pallet conveyance device according to any one of claims 1 to 3, wherein a third intermediate attachment (70C) of the plurality of intermediate attachments (70) includes a second actuator (96) operable between a third state of gripping a gripping portion (216) provided on a third pallet (PC) and a fourth state of releasing the gripped gripping portion (216).

5. A pallet handling system comprising:
a plurality of machine tools (21) on which pallets (P) of different types are mounted;
a pallet stocker (31) for storing a plurality of pallets (P); and
the pallet conveyance device (10) according to any one of claims 1 to 4 that conveys a pallet (P) between each of the plurality of machine tools (21) and the pallet stocker (31).
